# EUROPEAN PATENT SPECIFICATION

(11) **EP 4 464 537 B1**
(45) Date of publication and mention of the grant of the patent: **21.10.2026**
(21) Application number: 23752238.8
(22) Date of filing: 17.01.2023
(51) Int. Cl.: B60L 15/20, B60L 3/10, B60L 3/12

(54) **MOTOR TORQUE CONTROL METHOD AND APPARATUS, ELECTRONIC DEVICE, AND VEHICLE**
MOTORDREHMOMENTSTEUERUNGSVERFAHREN UND -VORRICHTUNG, ELEKTRONISCHE VORRICHTUNG UND FAHRZEUG
PROCÉDÉ ET APPAREIL DE COMMANDE DE COUPLE DE MOTEUR, DISPOSITIF ÉLECTRONIQUE ET VÉHICULE

(30) Priority: 11.02.2022 CN 202210130489
(43) Date of publication of application: 20.11.2024
(73) Proprietor: Great Wall Motor Company Limited, Baoding, Hebei 071000 (CN)
(72) Inventor: CAO, Zhimin, Baoding, Hebei 071000 (CN); CHANG, Cheng, Baoding, Hebei 071000 (CN)
(74) Representative: Klunker IP Patentanwälte PartG mbB
(86) International application number: PCT/CN2023/072574
(87) International publication number: WO 2023/151458

(56) References cited:
- CA-A- 1 123 496
- CN-A- 105 015 549
- CN-A- 106 183 892
- CN-A- 107 139 916
- CN-A- 111 016 916
- CN-A- 111 086 500
- CN-A- 112 477 622
- CN-A- 115 246 324
- JP-A- 2019 037 030
- US-A1- 2021 078 581

## Description

### TECHNICAL FIELD

The present invention relate to the technical field of automobiles and more particularly, to a control method of a motor torque, a corresponding electronic device, and a corresponding vehicle comprising the device, and a computer program product as well as a computer-readable medium.

### BACKGROUND

When a vehicle runs on a road with low friction, the tire slips easily, which affects the running safety of the vehicle and increases the probability of a safety accident. The internal VCU (Vehicle control unit) of the electric drive vehicle transmits a torque request to each controller by internal calculation, distribution and coordination, so as to convert battery power into motor torque limit and thus perform the torque limit on the motor.

Usually, the strategy of the slip working condition only considers the single-wheel slip working condition. However, when the wheels at either ends of the drive axle of the vehicle slip, the difference between the left and right wheel speeds becomes small, resulting in inaccurate torque limits.

CN 106 183 892 A discloses a test vehicle for an electric wheel drive automobile, including a vehicle body, a steering wheel, an independent suspension, and four electric wheel assemblies each comprising a wheel, a hub motor and an electromagnetic brake. The four electric wheel assemblies are respectively connected to the vehicle body through an independent suspension. A steering motor is mounted on the independent suspension, and the electric wheel assembly is connected to the steering motor through the steering shaft; a wheel speed sensor, a steering wheel angle sensor is arranged on the vehicle body, Gyroscope and control system, the wheel speed sensor is four, respectively installed on four electric wheel assemblies; characterized in that: the control system includes a sensor signal processor, a road surface state estimator, a CAN bus, an electronic difference a speed controller, a yaw moment controller, a drive anti-skid controller, a torque coordination distributor, and a vehicle travel state estimation system; wherein the wheel speed sensor, the steering wheel angle sensor, and the gyroscope are all connected to the sensor signal processor The sensor signal processor, the road surface state estimator, the electronic differential controller, the yaw moment controller, and the drive defense The sliding controller and the torque coordination distributor are all connected to the vehicle driving state estimation system via the CAN bus. The vehicle driving state estimation system includes a wheel slip rate estimator, a vehicle speed estimator, a yaw moment estimator, a vehicle speed determiner, a high speed module, a medium and low speed module, a slip condition judger, a steering judger, and a one-sided single Roller-slip module, opposite-side two-wheel slip module, same-side two-wheel slip module, three-wheel and four-wheel slip module.

CN 112 477 622 A discloses a vehicle control method including a sports mode, and the sports mode includes: Acquiring the accelerator pedal opening degree of the accelerator pedal of the vehicle currently being stepped on, and the current rotational speed of the driving motor of the vehicle; determining the corresponding motor peak power and motor efficiency according to the current speed; determining the target power according to the accelerator pedal opening, the peak power of the motor, and the efficiency of the motor; and controlling the output power of the energy supply system of the vehicle according to the target power to accelerate the vehicle, wherein the acceleration pedal opening and the motor peak power are positively correlated with the target power, and the motor efficiency is negatively correlated with the target power.

US 2021/078581 A1 discloses a method for operating a vehicle, comprising: operating an electric machine of a first axle in a torque control mode via a controller; and exiting the torque control mode and entering the electric machine of the first axle in to a speed control mode via the controller in response to an indication of a wheel of the first axle slipping. By switching an operating mode of the electric machine from a torque control mode to a speed control mode, wheel slip control is improved without significantly reducing driveline efficiency. The speed of the electric machine directly reflects wheel speed, so controlling wheel slip via controlling electric machine speed provides improved wheel slip control as compared to controlling wheel torque to limit wheel slip. In addition, a driver's torque demand is still met even though one wheel of an axle may begin to slip. Wheels of a second axle are supplied with torque to meet the driver demand torque while a speed and torque of the slipping wheel are reduced to control wheel slip.

### SUMMARY

It is an object of the present invention to provide a control method of a motor torque, a corresponding electronic device, a vehicle comprising the device, and a computer program product as well as a computer-readable medium, aiming to solve the problem of inaccurate torque limits when wheels on two ends of drive axle slip.

The object is achieved with the features of independent claim 1 regarding the method, of independent claim 8 regarding the device, of independent claim 10 regarding the computer program product, and of independent claim 11 regarding the computer-readable medium.

The control method of a motor torque, the corresponding electronic device, and corresponding vehicle are provided by the present invention. The current vehicle speed of the vehicle and the wheel speeds at either ends of the drive axle acquired in real time during the travel of the vehicle, to determine a wheel speed difference at the drive axle in real time according to the wheel speeds at either ends. It is determined whether the vehicle is a single-wheel slip or a non-single-wheel slip according to the vehicle speed, the wheel speeds and the wheel speed difference. When the vehicle is the single-wheel slip, one end of the vehicle idles due to the slip, and the other end has a slower rotation speed. The vehicle speed is less than or equal to the wheel speed of the wheel with the slower rotation speed. When the vehicle is in the non-single-wheel slip working condition, namely, when double-wheel slip occurs at the drive axle or the vehicle runs normally, the wheel speed is greater than or equal to the vehicle speed. Therefore, the target speed on which the torque limiting operation to be performed is based on the current working condition, the current vehicle speed and the wheel speeds at either ends of the drive axle. By considering two cases of single-wheel slip and non-single-wheel slip respectively, different speed values are respectively taken as the target speeds on which the torque limiting operation is based, thereby effectively improving the accuracy of the determined torque limiting, and further improving the torque limiting effect on the motor.

The above description is merely an overview of the technical aspects of the present . The detailed description of the present invention will be described below to make the above and other objects, features and advantages of the present invention more apparent.

### BRIEF DESCRIPTION OF THE DRAWINGS

In order to more clearly illustrate the technical solutions of the present invention, the drawings to be used in the description of the invention will be briefly introduced below.
FIG. 1 is a schematic flow chart of a control method;
FIG. 2 is a schematic flow chart for determining a slip working condition;
FIG. 3 is a schematic flow chart for determining a target speed;
FIG. 4 is a schematic flow chart for acquiring an available power;
FIG. 5 is a schematic flow chart for determining an available discharge power;
FIG. 6 is a schematic flow chart for comparing peak torque limit values;
FIG. 7 is a schematic flow chart of temperature correction;
FIG. 8 is a schematic diagram of modules of a control apparatus; and
FIG. 9 is a schematic diagram of modules of an electronic device.

### DETAILED DESCRIPTION

The technical solutions of the invention will be described clearly and completely in conjunction with the accompanying drawings. Obviously, the described examples are only part of the s of the invention, rather than all of the examples.

When the vehicle runs on a road with low friction, the tire slips easily, which affects the running safety of the vehicle and increases the probability of a safety accident. The internal VCU of the electric drive vehicle internally calculates, distributes, coordinates, and needs to convert a battery power into motor torque limits. It limits the motor torque on the torque path, and finally sends the torque request to each controller.

The strategy of the slip working condition only considers the single-wheel slip working condition. However, when the wheels on either ends of the drive axle of the vehicle slip, the difference between the left and right wheel speeds is small, resulting in inaccuracies in the resulting limited torque.

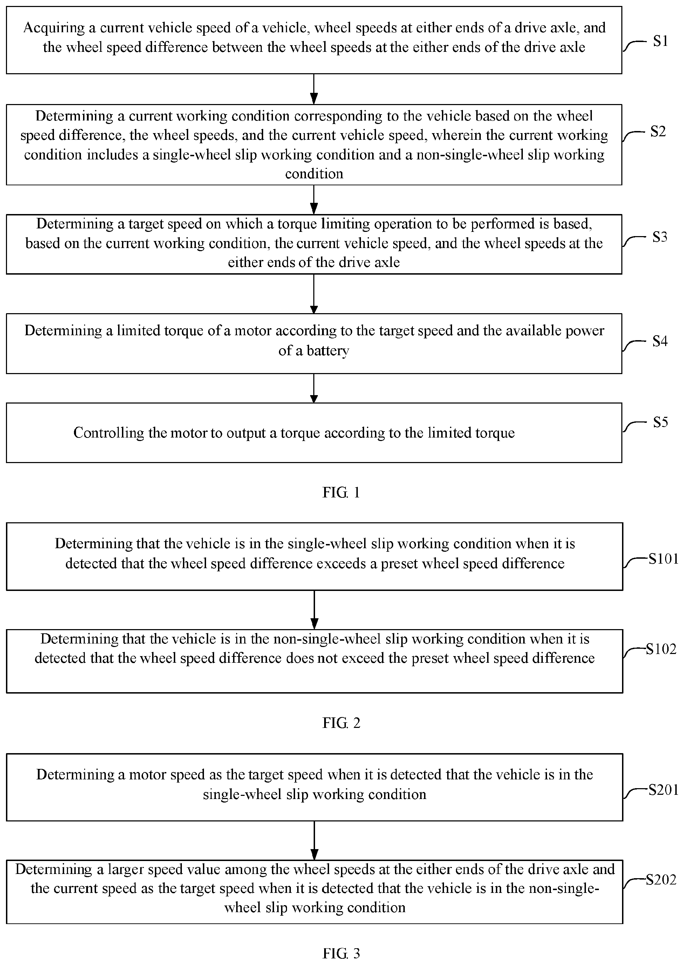

According to a first aspect of an of the present invention. Referring to FIG. 1, a control method of a motor torque is provided, the control method including:
S1, acquiring a current vehicle speed of a vehicle, wheel speeds at either ends of a drive axle, and the wheel speed difference between the wheel speeds at the either ends of the drive axle.

When a vehicle slip occurs, two situations are generally included, one is a single-wheel slip, and the other is a double-wheel slip. When a single-wheel slip occurs, the friction between the wheel at one end of the drive axle and the ground is relatively small, and the friction at the other end is relatively large. Due to a differential, the wheel at a section with a relatively small friction runs idle, while the wheel at a side with an increased friction has a relatively slow rotation speed.

The other is that the friction between the wheels at either ends of the drive axle and the ground is small, resulting in that the rotation speeds of the two wheels are both fast, while the difference between the wheel speeds is small, resulting in that the vehicle speed is less than the wheel speed, then the double-wheel slip occurs. However, when the vehicle is traveling normally, the vehicle speed is close to the wheel speeds at the either ends of the drive axle. Therefore, the conditions where the double-wheel slip occurs and the vehicle runs normally are considered to be non-single-wheel slip working conditions in a unified manner. Thus, the current vehicle speed of the vehicle and the wheel speeds at the either ends of the drive axle are obtained in real time during the travel of the vehicle, for determining the current working condition of the vehicle.

In the acquisition, the wheel speeds at either ends may be a rotation speed value or a speed value. When the acquired wheel speed is the rotation speed, the wheel speed value is converted into a vehicle speed value, so as to facilitate calculation and comparison.

S2, determining a current working condition corresponding to the vehicle based on the wheel speed difference, the wheel speeds, and the current vehicle speed, wherein the current working condition includes a single-wheel slip working condition and a non-single-wheel slip working condition.

The current vehicle speed of the vehicle and the wheel speeds at the either ends of the drive axle are acquired in real time during the travel of the vehicle, and it is decided whether the vehicle enters a single-wheel slip state according to the wheel speed difference of the wheel speeds at the either ends of the drive axle. When the wheel speed difference is large, the vehicle may be considered to enter the single-wheel slip working condition. When the wheel speed difference is small, the vehicle may be considered to be in a normal travel state or that double wheels at the drive axle slip simultaneously.

S3, determining a target speed on which a torque limiting operation to be performed is based, based on the current working condition, the current vehicle speed, and the wheel speeds at the either ends of the drive axle.

In order to effectively improve the torque-limiting action of the motor, and to reduce the damage to the battery, since the vehicle speed is generally 0 in the case of single-wheel slip, and the wheel speed of the wheels at the drive axle is faster in the case of double-wheel slip, it is often necessary to depend on the speed closer to the actual wheel speed when acquiring the data, so that the obtained limited torque is more accurate. Therefore, different target speeds are selected under different slip working conditions.

S4, determining a limited torque of a motor according to the target speed and an available power of a battery.

According to the model of the vehicle itself, the output limited torques tend to be different based on the different powers of the battery. Therefore, according to the available power of the battery and the acquired target speed, the output limited torque to disengage the vehicle from the slip state is calculated according to the following formula:$T = 9550 P / n$ where T is the limited torque, P is the available power, and n is the target speed, wherein, when n is a speed value or a motor speed value, it is converted into a wheel speed value of a wheel at the drive axle, thereby acquiring accurate data.

S5, controlling the motor to output a torque according to the limited torque.

After the limited torque is obtained, the motor torque is limited on the VCU internal torque path and the torque request is sent to each controller.

When the current vehicle speed of the vehicle and the wheel speeds at the either ends of the drive axle are acquired in real time, the wheel speed difference of the drive axle is determined according to the wheel speeds at the either ends in real time, and it is decided whether the vehicle is slipping according to the vehicle speed, the wheel speed and the wheel speed difference. When the vehicle has a single-wheel slip, one end of the wheels at the either ends of the drive axle is idle due to the slip, and the other end has a slower rotation speed, while the vehicle speed is less than or equal to the wheel speed of the wheel with the slower rotation speed. Therefore, the motor speed may be taken as a target speed on which the torque limiting operation to be performed is based; while when the vehicle has a double-wheel slip at the drive axle, it can be considered that both the wheels at the either ends of the drive axle are idle, and the vehicle speed is slow. Therefore, the greater speed value among the wheel speeds at the either ends of the drive axle and the current vehicle speed are taken as the target speeds for determining the torque limiting operation to be performed. When the vehicle is traveling normally, the values of the wheel speeds at either ends of the drive axle and the current vehicle speed are consistent, so that the double-wheel slip working condition and the normal travel condition may be combined as the non-single-wheel slip working condition, thereby effectively improving the accuracy of the determined limited torque, and further improving the torque limiting effect on the motor.

Referring to FIG. 2, the determining the current working condition corresponding to the vehicle based on the wheel speed difference, the wheel speeds, and the current vehicle speed may include:
S101, determining that the vehicle is in the single-wheel slip working condition when it is detected that the wheel speed difference exceeds a preset wheel speed difference.

Due to the differential, when the single-wheel slip occurs, the wheel at one side where the frictional force is smaller idles, and the wheel at the other side where the frictional force is greater rotates at a slower speed. Thus, it can be considered that the single-wheel slip occurs at the side of the drive axle of the vehicle when it is detected that the wheel speed difference exceeds the preset wheel speed difference.

The preset wheel speed difference may be calibrated according to different vehicle models and performances so as to improve applicability.

S102, determining that the vehicle is in the non-single-wheel slip working condition when it is detected that the wheel speed difference does not exceed the preset wheel speed difference and the wheel speeds at the either ends of the drive axle are not less than the vehicle speed.

When it is detected that the wheel speed difference does not exceed the preset wheel speed difference and the wheel speeds at either ends of the drive axle are both greater than the vehicle speed, it cannot be determined whether the vehicle slips depending on the wheel speed difference at this moment. Therefore, when the wheel speed difference is detected at either ends, the difference between the vehicle speed and the wheel speeds at the either ends of the drive axle is detected. When the difference is greater than the preset difference, it is determined that the double-wheel slip occurs. When the difference is less than or equal to the preset difference, it is determined that the vehicle is in a normal travel, and both the double-wheel slip and the normal travel are non-single-wheel slip working conditions.

When the wheel speeds at the either ends of the drive axle are different, the difference between the current vehicle speed and the lower wheel speed is used as a criterion to improve accuracy.

Referring to FIG. 3, the determining the target speed on which the torque limiting operation to be performed is based, based on the current working condition, the current vehicle speed, and the wheel speeds at the either ends of the drive axle includes:
S201, determining the motor speed as the target speed when it is detected that the vehicle is in the single-wheel slip working condition.

When the single-wheel slip occurs, one end of the wheels at either ends of the drive axle idles due to the slip, and the rotation speed of the other end and the vehicle speed are generally close to 0. Thus, the motor speed is directly obtained as a reference value, thereby making the limited torque more accurate.

S202, determining a greater speed value among the wheel speeds at the either ends of the drive axle and the current vehicle speed as the target speed when it is detected that the vehicle is in the non-single-wheel slip working condition.

In this case, since the vehicle speed is low, if the limited torque is calculated according to the vehicle speed, the limited torque is easy to be large, and the torque limiting effect on the motor is poor. When the vehicle is traveling normally, the wheel speeds at the either ends of the drive axle and the current vehicle speed are substantially equal, so that the greater value thereof is used as the target speed, thereby satisfying the torque limiting operation at the time of double-wheel slip of the vehicle and at the time of traveling normally, improving the applicability of the method.

When the vehicle speed signal or the drive wheel speed signal is detected to be invalid or abnormal, the motor speed may be determined as the target speed, effectively avoiding the fluctuation of the limited torque of the motor when the signal is abnormal, improving the stability of the system.

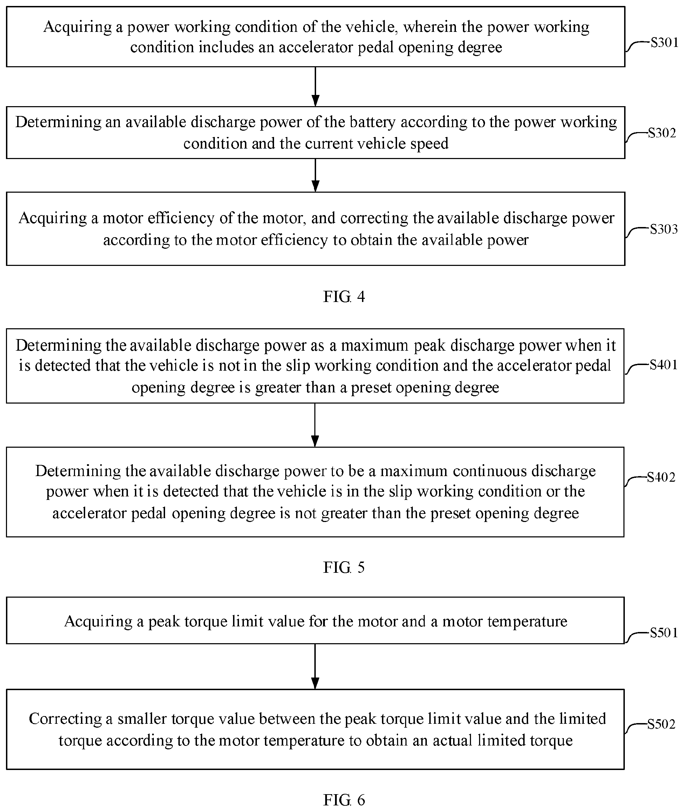

Referring to FIG. 4, the available power is obtained by:
S301, acquiring a power working condition of the vehicle, wherein the power working condition includes an accelerator pedal opening degree.

The battery discharge power includes a maximum continuous discharge power and a maximum peak discharge power. Here, the maximum continuous discharge power is a normal discharge power when the battery is continuously working. The maximum peak discharge power is the maximum power of the battery, but the maximum peak discharge power may only be output for a short time. Therefore, in order to maximize the use of the battery, different powers may be selected according to different operating conditions of the current vehicle.

S302, determining an available discharge power of the battery based on the power working condition and the current vehicle speed.

Here, the driving demand of the driver is decided according to the current vehicle speed and the power working condition so as to determine the output power of the battery. When the power working condition and the current vehicle speed indicate that the driver needs high power, the battery is controlled to output the maximum peak discharge power in a short time, otherwise, the normal maximum continuous discharge power is output.

S303, acquiring a motor efficiency of the motor, and correcting the available discharge power according to the motor efficiency to obtain the available power.

When the battery supplies power to the motor, the power output by the battery to the motor cannot be fully converted into the output torque of the motor. Therefore, after determining the available discharge power of the motor, the available discharge power is corrected by the motor efficiency of the motor itself, i.e., the efficiency of converting the battery power into the output torque, so as to obtain the accurate available power, thereby making the final determined limited torque more accurate.

The control method may further include the following steps:
acquiring a consumed power of other high-voltage components of the vehicle, and a start-up reserved power when an engine is in a stopped state, and correcting the available power according to the consumed power and the start-up reserved power.

Specifically, the sum of the power demand of each component under the current working condition of the vehicle is obtained as the consumed power, and the power required when the engine is started, which is calibrated in advance, is detected as the reserved power for starting. The reserved power for starting may be 2 kw, and the consumed power and the reserved power for starting are subtracted from the available discharge power, so that the vehicle may ensure the normal operation of other components and the engine can be started in time when the engine needs to be started, which improves the practicability of the present method.

Referring to FIG. 5, the determining the available discharge power of the battery according to the power working condition and the current vehicle speed includes the following steps:
S401, determining the available discharge power as a maximum peak discharge power when it is detected that the vehicle is not in the slip working condition and the accelerator pedal opening degree is greater than a preset opening degree.

When the accelerator pedal opening degree is not less than the preset opening degree, it can be considered that the vehicle has an acceleration intention. Therefore, a large power is provided to improve the acceleration performance of the vehicle.

S402, determining the available discharge power to be a maximum continuous discharge power when it is detected that the vehicle is in the slip working condition or the accelerator pedal opening degree is not greater than the preset opening degree.

When it is detected that the vehicle is in the slip working condition, if the maximum peak discharge power is selected, over-discharge of the battery is likely to occur. Also, there is no power shortage at this time, but the tire adhesion is poor. Thus, the battery is controlled to output a relatively low maximum continuous discharge power.

When the accelerator pedal opening degree is less than the preset opening degree, it may be considered that the vehicle is in a constant-speed travel state or the acceleration intention is low. Therefore, the battery is controlled to output a relatively low maximum continuous discharge power.

Since the maximum peak discharge power has certain damage to the battery, the maximum peak discharge power is output within a preset time period. For example, the preset time period may be 6 seconds. When the maximum peak discharge power is output for more than 6 seconds, it is switched to be the maximum continuous discharge power to improve the service life of the battery.

Here, the preset opening degree may be determined with respect to the current vehicle speed. When the current vehicle speed is low, the preset opening degree may be a small opening degree. For example, when the vehicle speed is 10 km/h, the preset opening degree may be 20%. When the current vehicle speed is high, the preset opening degree is set to be a small opening degree, so as to decide the driving intention of the vehicle more accurately and further improve the utilization rate of battery power.

Referring to FIG. 6, the method further includes:
S501, acquiring a peak torque limit value of the motor and a motor temperature.

When the calculated limited torque exceeds the maximum output torque of the motor, i.e., the peak torque limit value, the motor cannot output this torque, which may easily lead to motor failure, so that the peak torque limit value of the motor is acquired to determine whether the calculated limiting torque can be output.

At the same time, since the temperature of the motor has an influence on the working condition of the motor, according to the temperature difference of the motor, the torque of the motor is corrected by acquiring the temperature of the motor, so as to improve the accuracy of the final output torque of the motor.

S502, correcting a smaller torque value between the peak torque limit value and the limited torque according to the motor temperature to obtain an actual limited torque.

By comparing with the peak torque limit value, the peak torque limit value is output when the calculated limited torque exceeds the maximum output torque of the motor, i.e., the peak torque limit value, so as to effectively avoid the occurrence of motor fault fluctuation. At the same time, the accuracy of the final output torque of the motor is effectively improved by correcting the final output torque of the motor.

The controlling the motor to output the torque according to the limited torque includes the following step:
controlling the motor to output the torque according to the actual limited torque.

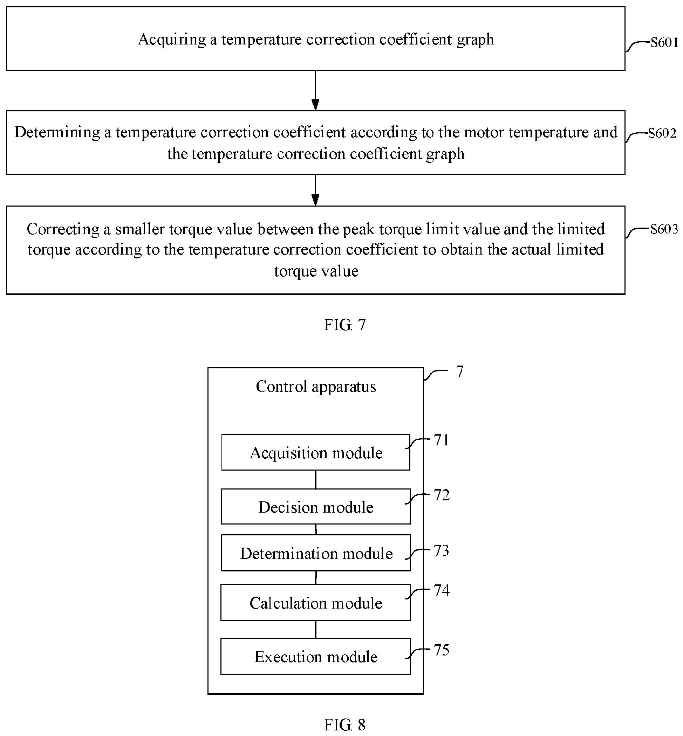

Referring to FIG. 7, the correcting a smaller torque value between the peak torque limit value and the limited torque according to the motor temperature to obtain the actual limited torque includes:
S601, acquiring a temperature correction coefficient graph.

According to the bench test previously tested, the influence of different motor temperatures on the motor torque and the influence on itself when the motor at different temperatures output different torque are determined to obtain the temperature correction coefficient graph which characterizes the temperature correction coefficient of the motor output torque corresponding to the motor temperature.

S602, determining a temperature correction coefficient according to the motor temperature and the temperature correction coefficient graph.

According to the motor temperature, the influence degree of the current motor temperature on the torque, namely, the temperature correction coefficient, can be obtained by table looking-up.

S603, correcting a smaller torque value between the peak torque limit value and the limited torque according to the temperature correction coefficient to obtain the actual limited torque value.

The actual limited torque of the final motor output may be obtained by multiplying the temperature correction coefficient by the smaller torque value between the peak torque limit value and the limited torque.

The above described present invention may be implemented by a control apparatus of a motor torque. Referring to FIG. 8, the control apparatus 7 may include:
an acquisition module 71 configured for acquiring a current vehicle speed of a vehicle, wheel speeds at either ends of a drive axle, and a wheel speed difference between the wheel speeds at the either ends of the drive axle;
a decision module 72 configured for determining a current working condition corresponding to the vehicle based on the wheel speed difference, the wheel speeds, and the current vehicle speed, wherein the current working condition includes a single-wheel slip working condition and a non-single-wheel slip working condition;
a determination module 73 configured for determining a target speed on which a torque limiting operation to be performed is based, based on the current working condition, the current vehicle speed, and the wheel speeds at the either ends of the drive axle;
a calculation module 74 configured for determining a limited torque of the motor according to the target speed and an available power of a battery; and
an execution module 75 configured for controlling the motor to output a torque according to the limited torque.

The decision module 72 may further be configured for performing the following steps:
determining that the vehicle is in the single-wheel slip working condition when it is detected that the wheel speed difference exceeds the preset wheel speed difference; and
determining that the vehicle is in the non-single-wheel slip working condition when it is detected that the wheel speed difference does not exceed the preset wheel speed difference and the wheel speeds at the either ends of the drive axle are not less than the vehicle speed.

The determination module 73 is further configured for performing the following steps:
determining the motor speed as the target speed when it is detected that the vehicle is in the single-wheel slip working condition; and
determining a greater speed value among the wheel speeds at the either ends of the drive axle and the current vehicle speed as the target speed when it is detected that the vehicle is in the non-single-wheel slip working condition.

The determination module 73 may further be configured for performing the following steps:
acquiring a power working condition of the vehicle, wherein the power working condition includes an accelerator pedal opening degree;
determining an available discharge power of the battery according to the power working condition and the current vehicle speed; and
acquiring a motor efficiency of the motor, and correcting the available discharge power according to the motor efficiency to obtain the available power.

The determination module 73 may further be configured for performing the following steps:
determining the available discharge power as a maximum peak discharge power when it is detected that the vehicle is not in the slip working condition and the accelerator pedal opening degree is greater than a preset opening degree; and
determining the available discharge power to be a maximum continuous discharge power when it is detected that the vehicle is in the slip working condition or the accelerator pedal opening degree is not greater than the preset opening degree.

The control device 7 may further include a correction module for performing the following steps:
acquiring a peak torque limit value for the motor and the motor temperature; and
correcting a smaller torque value of the peak torque limit value and the limited torque according to the motor temperature to obtain an actual limited torque.

The correction module may further be configured for performing the following steps:
acquiring a temperature correction coefficient graph;
determining a temperature correction coefficient according to the motor temperature and the temperature correction coefficient graph; and
correcting a smaller torque value of the peak torque limit value and the limited torque according to the temperature correction coefficient to obtain the actual limited torque value.

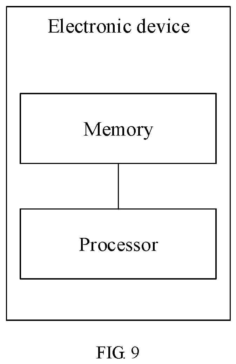

An electronic device according to the present invention, with reference to FIG. 9, includes:
a memory configured for storing a computer program; and
a processor configured for executing a computer program stored on the memory to implement any one of the control methods.

A vehicle according to the present invention, includes the above-described electronic device to implement the above-described control method.

The present invention further provides a computer program product including computer readable codes which, when run on an electronic device, cause the electronic device to perform any one of the control methods.

The present invention further provides a computer-readable medium, in which a computer program is stored which, when runs on an electronic device, causes the electronic device to perform any one of the control methods.

With respect to the apparatus , which is substantially similar to the method , the description is relatively simple, for which reference is made to the partial description of the method .

Each example described in this description focuses on the differences from the other examples, and reference is made to the same or similar parts in each example.

Persons skilled in the art will appreciate that the present invention may be provided as a method, an apparatus, or a computer program product. Accordingly, the present invention may take the form of entire hardware, entire software, or combining software and hardware aspects. Moreover, the present invention may take the form of a computer program product embodied on one or more computer-usable storage media (including, but not limited to, magnetic disk storage, CD-ROM, optical storage, and the like) having computer-usable program code embodied therein.

The present invention is described with reference to flowchart illustrations and/or block diagrams of methods, terminal devices (systems), and computer program products. It will be understood that each flow and/ or block of the flowcharts and/or block diagrams in combination with flows and/or blocks in the flowcharts and/or block diagrams can be implemented by computer program instructions. These computer program instructions may be provided to processors of a general purpose computer, a special purpose computer, an embedded processor, or other programmable data processing terminal equipment to produce a machine, such that the instructions, which are executed via the processor of the computer or other programmable data processing terminal equipment, create means for implementing the functions specified in the flowchart flow or flows and/or block diagram block or blocks.

These computer program instructions may also be stored in a computer-readable memory that can direct a computer or other programmable data processing terminal devices to function in a particular manner, such that the instructions stored in the computer-readable memory produce an article of manufacture including instruction means which implement the function specified in the flowchart flow or flows and/or block diagram block or blocks.

These computer program instructions may also be loaded onto a computer or other programmable data processing terminal devices to cause a series of operational steps to be performed on the computer or other programmable devices to produce a computer implemented process, such that the instructions executed on the computer or other programmable terminal devices provide steps for implementing the functions specified in the flowchart flow or flows and/or block diagram block or blocks.

Finally, it should be noted that relational terms such as first and second, and the like, may be used herein to distinguish one entity or action from another entity or action without necessarily requiring or implying any such actual relationship or order between such entities or actions. Furthermore, the terms "comprises", "comprising", or any other variation thereof, are intended to cover a non-exclusive inclusion, such that a process, method, article, or terminal device that includes a list of elements does not include only those elements but may include other elements not expressly listed or inherent to such process, method, article, or terminal device. An element proceeded by the phrase "including a" does not, without more constraints, preclude the existence of additional identical elements in the process, method, article, or terminal device that includes the element.

## Claims

1. A control method of a motor torque, wherein the control method comprises:
(S1) acquiring a current vehicle speed of a vehicle, wheel speeds at either ends of a drive axle, and a wheel speed difference between the wheel speeds at the either ends of the drive axle;
(S2) determining a current working condition corresponding to the vehicle based on the wheel speed difference, the wheel speeds, and the current vehicle speed, wherein the current working condition comprises a single-wheel slip working condition and a non-single-wheel slip working condition;
(S3) determining a target speed on which a torque limiting operation to be performed is based, based on the current working condition, the current vehicle speed, and the wheel speeds at the either ends of the drive axle, wherein
(S201) when the vehicle is detected to be in the single-wheel slip working condition, the motor speed is determined as the target speed, and
(S202) when the vehicle is detected to be in the non-single-wheel slip working condition, a greater speed value among the wheel speeds at either end of the drive axle and the current vehicle speed is determined as the target speed;
(S4) determining a limited torque of a motor according to the target speed and an available power of a battery, wherein the limited torque is calculated according to the following formula T=9550P/n, where T is the limited torque, P is the available power, and n is the target speed; and
(S5) controlling the motor to output a torque according to the limited torque.

2. The control method according to claim 1, wherein the (S2) determining the current working condition corresponding to the vehicle based on the wheel speed difference, the wheel speeds, and the current vehicle speed comprises:
(S101) determining that the vehicle is in the single-wheel slip working condition when it is detected that the wheel speed difference exceeds a preset wheel speed difference; and
(S102) determining that the vehicle is in the non-single-wheel slip working condition when it is detected that the wheel speed difference does not exceed the preset wheel speed difference.

3. The control method according to claim 1, wherein the available power is obtained by steps of:
(S301) acquiring a power working condition of the vehicle, wherein the power working condition comprises an accelerator pedal opening degree;
(S302) determining an available discharge power of the battery according to the power working condition and the current vehicle speed; and
(S303) acquiring a motor efficiency of the motor, and correcting the available discharge power according to the motor efficiency to obtain the available power.

4. The control method according to claim 3, wherein the (S302) determining an available discharge power of the battery according to the power working condition and the current vehicle speed comprises:
(S401) determining the available discharge power as a maximum peak discharge power when it is detected that the vehicle is not in the slip working condition and the accelerator pedal opening degree is greater than a preset opening degree; and
(S402) determining the available discharge power to be a maximum continuous discharge power when it is detected that the vehicle is in the slip working condition or the accelerator pedal opening degree is not greater than the preset opening degree.

5. The control method according to claim 3, wherein the control method further comprises:
acquiring a consumed power of each component of the vehicle, and a start-up reserved power when an engine is in a stopped state, and correcting the available power according to the consumed power and the start-up reserved power.

6. The control method according to claim 1, wherein the method further comprises:
(S501) acquiring a peak torque limit value for the motor and a motor temperature; and
(S502) correcting a smaller torque value between the peak torque limit value and the limited torque according to the motor temperature to obtain an actual limited torque;
wherein the controlling the motor to output the torque according to the limited torque comprises:
controlling the motor to output the torque according to the actual limited torque.

7. The control method according to claim 6, wherein the (S502) correcting the smaller torque value between the peak torque limit value and the limited torque according to the motor temperature to obtain the actual limited torque comprises:
(S601) acquiring a temperature correction coefficient graph;
(S602) determining a temperature correction coefficient according to the motor temperature and the temperature correction coefficient graph; and
(S603) correcting a smaller torque value between the peak torque limit value and the limited torque according to the temperature correction coefficient to obtain the actual limited torque.

8. An electronic device, wherein comprising:
a memory configured for storing a computer program; and
a processor configured for executing the computer program stored on the memory to implement the control method according to any one of claims 1-7.

9. A vehicle, wherein comprising the electronic device according to claim 8.

10. A computer program product comprising computer-readable codes which, when run on an electronic device, causes the electronic device to perform the control method according to any one of claims 1-7.

11. A computer-readable medium, in which the computer program according to claim 10 is stored.

## Patentansprüche

1. Steuerverfahren eines Motordrehmoments, wobei das Steuerverfahren aufweist:
(S1) Erfassen einer aktuellen Fahrzeuggeschwindigkeit eines Fahrzeugs, von Radgeschwindigkeiten an beiden Enden einer Antriebsachse und einer Radgeschwindigkeitsdifferenz zwischen den Radgeschwindigkeiten an den beiden Enden der Antriebsachse;
(S2) Bestimmen eines aktuellen Betriebszustands, der dem Fahrzeug entspricht, auf Grundlage der Radgeschwindigkeitsdifferenz, der Radgeschwindigkeiten und der aktuellen Fahrzeuggeschwindigkeit, wobei der aktuelle Betriebszustand einen Einzelradschlupf-Betriebszustand und einen Nicht-Einzelradschlupf-Betriebszustand aufweist;
(S3) Bestimmen einer Zielgeschwindigkeit, auf der ein durchzuführender Drehmomentbegrenzungsvorgang basiert, auf Grundlage des aktuellen Betriebszustands, der aktuellen Fahrzeuggeschwindigkeit und der Radgeschwindigkeiten an den beiden Enden der Antriebsachse, wobei
(S201), wenn erkannt wird, dass sich das Fahrzeug im Einzelradschlupf-Betriebszustand befindet, die Motordrehzahl als die Zielgeschwindigkeit bestimmt wird, und
(S202), wenn erkannt wird, dass sich das Fahrzeug im Nicht-Einzelradschlupf-Betriebszustand befindet, ein größerer Geschwindigkeitswert unter den Radgeschwindigkeiten an beiden Enden der Antriebsachse und der aktuellen Fahrzeuggeschwindigkeit als die Zielgeschwindigkeit bestimmt wird;
(S4) Bestimmen eines begrenzten Drehmoments eines Motors gemäß der Zielgeschwindigkeit und einer verfügbaren Leistung einer Batterie, wobei das begrenzte Drehmoment gemäß der folgenden Formel T=9550P/n berechnet wird, wobei T das begrenzte Drehmoment ist, P die verfügbare Leistung ist und n die Zielgeschwindigkeit ist; und
(S5) Steuern des Motors, um ein Drehmoment gemäß dem begrenzten Drehmoment auszugeben.

2. Steuerverfahren nach Anspruch 1, wobei das (S2) Bestimmen des aktuellen Betriebszustands, der dem Fahrzeug entspricht, auf Grundlage der Radgeschwindigkeitsdifferenz, der Radgeschwindigkeiten und der aktuellen Fahrzeuggeschwindigkeit aufweist:
(S101) Bestimmen, dass sich das Fahrzeug im Einzelradschlupf-Betriebszustand befindet, wenn erkannt wird, dass die Radgeschwindigkeitsdifferenz eine voreingestellte Radgeschwindigkeitsdifferenz überschreitet; und
(S102) Bestimmen, dass sich das Fahrzeug im Nicht-Einzelradschlupf-Betriebszustand befindet, wenn erkannt wird, dass die Radgeschwindigkeitsdifferenz die voreingestellte Radgeschwindigkeitsdifferenz nicht überschreitet.

3. Steuerverfahren nach Anspruch 1, wobei die verfügbare Leistung durch folgende Schritte erhalten wird:
(S301) Erfassen eines Leistungsbetriebszustands des Fahrzeugs, wobei der Leistungsbetriebszustand einen Fahrpedal-Öffnungsgrad aufweist;
(S302) Bestimmen einer verfügbaren Entladeleistung der Batterie gemäß dem Leistungsbetriebszustand und der aktuellen Fahrzeuggeschwindigkeit; und
(S303) Erfassen eines Motorwirkungsgrads des Motors und Korrigieren der verfügbaren Entladeleistung gemäß dem Motorwirkungsgrad, um die verfügbare Leistung zu erhalten.

4. Steuerverfahren nach Anspruch 3, wobei das (S302) Bestimmen einer verfügbaren Entladeleistung der Batterie gemäß dem Leistungsbetriebszustand und der aktuellen Fahrzeuggeschwindigkeit aufweist:
(S401) Bestimmen der verfügbaren Entladeleistung als eine maximale Spitzenentladeleistung, wenn erkannt wird, dass sich das Fahrzeug nicht im Schlupfbetriebszustand befindet und der Fahrpedal-Öffnungsgrad größer als ein voreingestellter Öffnungsgrad ist; und
(S402) Bestimmen, dass die verfügbare Entladeleistung eine maximale Dauerentladeleistung ist, wenn erkannt wird, dass sich das Fahrzeug im Schlupfbetriebszustand befindet oder der Fahrpedal-Öffnungsgrad nicht größer als der voreingestellte Öffnungsgrad ist.

5. Steuerverfahren nach Anspruch 3, wobei das Steuerverfahren ferner aufweist:
Erfassen einer verbrauchten Leistung jeder Komponente des Fahrzeugs und einer Startreserveleistung, wenn sich ein Verbrennungsmotor in einem gestoppten Zustand befindet, und Korrigieren der verfügbaren Leistung gemäß der verbrauchten Leistung und der Startreserveleistung.

6. Steuerverfahren nach Anspruch 1, wobei das Verfahren ferner aufweist:
(S501) Erfassen eines Spitzendrehmoment-Grenzwerts für den Motor und einer Motortemperatur; und
(S502) Korrigieren eines kleineren Drehmomentwerts zwischen dem Spitzendrehmoment-Grenzwert und dem begrenzten Drehmoment gemäß der Motortemperatur, um ein tatsächliches begrenztes Drehmoment zu erhalten;
wobei das Steuern des Motors, um das Drehmoment gemäß dem begrenzten Drehmoment auszugeben, aufweist:
Steuern des Motors, um das Drehmoment gemäß dem tatsächlichen begrenzten Drehmoment auszugeben.

7. Steuerverfahren nach Anspruch 6, wobei das (S502) Korrigieren des kleineren Drehmomentwerts zwischen dem Spitzendrehmoment-Grenzwert und dem begrenzten Drehmoment gemäß der Motortemperatur, um das tatsächliche begrenzte Drehmoment zu erhalten, aufweist:
(S601) Erfassen eines Temperaturkorrekturkoeffizienten-Diagramms;
(S602) Bestimmen eines Temperaturkorrekturkoeffizienten gemäß der Motortemperatur und dem Temperaturkorrekturkoeffizienten-Diagramm; und
(S603) Korrigieren eines kleineren Drehmomentwerts zwischen dem Spitzendrehmoment-Grenzwert und dem begrenzten Drehmoment gemäß dem Temperaturkorrekturkoeffizienten, um das tatsächliche begrenzte Drehmoment zu erhalten.

8. Elektronische Vorrichtung, aufweisend:
einen Speicher, der zum Speichern eines Computerprogramms konfiguriert ist; und
einen Prozessor, der zum Ausführen des auf dem Speicher gespeicherten Computerprogramms konfiguriert ist, um das Steuerverfahren nach einem der Ansprüche 1-7 zu implementieren.

9. Fahrzeug, aufweisend die elektronische Vorrichtung nach Anspruch 8.

10. Computerprogrammprodukt, aufweisend computerlesbare Codes, die, wenn sie auf einer elektronischen Vorrichtung laufen, die elektronische Vorrichtung veranlassen, das Steuerverfahren nach einem der Ansprüche 1-7 durchzuführen.

11. Computerlesbares Medium, in dem das Computerprogramm nach Anspruch 10 gespeichert ist.

## Revendications

1. Procédé de commande d'un couple moteur, dans lequel le procédé de commande comprend les étapes consistant à :
(S1) acquérir une vitesse de véhicule courante d'un véhicule, des vitesses de roue au niveau des deux extrémités d'un essieu d'entraînement et une différence de vitesse de roue entre les vitesses de roue au niveau des deux extrémités de l'essieu d'entraînement ;
(S2) déterminer un état de fonctionnement courant qui correspond au véhicule sur la base de la différence de vitesse de roue, des vitesses de roue et de la vitesse de véhicule courante, dans lequel l'état de fonctionnement courant comprend un état de fonctionnement avec patinage à une seule roue et un état de fonctionnement avec patinage non à une seule roue ;
(S3) déterminer une vitesse cible sur laquelle une opération de limitation de couple qui doit être effectuée est basée, sur la base de l'état de fonctionnement courant, de la vitesse de véhicule courante et des vitesses de roue au niveau des deux extrémités de l'essieu d'entraînement,
dans lequel :
(S201) lorsque le véhicule est détecté comme étant dans l'état de fonctionnement avec patinage à une seule roue, la vitesse de moteur est déterminée en tant que vitesse cible, et
(S202) lorsque le véhicule est détecté comme étant dans l'état de fonctionnement avec patinage non à une seule roue, une valeur de vitesse plus grande parmi les vitesses de roue au niveau des deux extrémités de l'essieu d'entraînement et la vitesse de véhicule courante est déterminée en tant que vitesse cible ;
(S4) déterminer un couple limité d'un moteur en fonction de la vitesse cible et d'une puissance disponible d'une batterie, dans lequel le couple limité est calculé conformément à la formule suivante T = 9550P/n, dans laquelle T représente le couple limité, P représente la puissance disponible et n représente la vitesse cible ; et
(S5) commander le moteur pour qu'il émette en sortie un couple en fonction du couple limité.

2. Procédé de commande selon la revendication 1, dans lequel l'étape (S2) de détermination de l'état de fonctionnement courant qui correspond au véhicule sur la base de la différence de vitesse de roue, des vitesses de roue et de la vitesse de véhicule courante comprend les étapes consistant à :
(S101) déterminer que le véhicule est dans l'état de fonctionnement avec patinage à une seule roue lorsqu'il est détecté que la différence de vitesse de roue dépasse une différence de vitesse de roue prédéfinie ; et
(S102) déterminer que le véhicule est dans l'état de fonctionnement avec patinage non à une seule roue lorsqu'il est détecté que la différence de vitesse de roue ne dépasse pas la différence de vitesse de roue prédéfinie.

3. Procédé de commande selon la revendication 1, dans lequel la puissance disponible est obtenue au moyen des étapes consistant à :
(S301) acquérir un état de fonctionnement en termes de puissance du véhicule, dans lequel l'état de fonctionnement en termes de puissance comprend un degré d'ouverture de la pédale d'accélérateur ;
(S302) déterminer une puissance de décharge disponible de la batterie en fonction de l'état de fonctionnement en termes de puissance et de la vitesse de véhicule courante ; et
(S303) acquérir un rendement de moteur du moteur et corriger la puissance de décharge disponible en fonction du rendement de moteur afin d'obtenir la puissance disponible.

4. Procédé de commande selon la revendication 3, dans lequel l'étape (S302) de détermination d'une puissance de décharge disponible de la batterie en fonction de l'état de fonctionnement en termes de puissance et de la vitesse de véhicule courante comprend les étapes consistant à :
(S401) déterminer la puissance de décharge disponible en tant que puissance de décharge de crête maximum lorsqu'il est détecté que le véhicule n'est pas dans l'état de fonctionnement avec patinage et que le degré d'ouverture de la pédale d'accélérateur est supérieur à un degré d'ouverture prédéfini ; et
(S402) déterminer la puissance de décharge disponible comme devant être une puissance de décharge continue maximum lorsqu'il est détecté que le véhicule est dans l'état de fonctionnement avec patinage ou que le degré d'ouverture de la pédale d'accélérateur n'est pas supérieur au degré d'ouverture prédéfini.

5. Procédé de commande selon la revendication 3, dans lequel le procédé de commande comprend en outre les étapes consistant à :
acquérir une puissance consommée de chaque composant du véhicule et une puissance réservée au démarrage lorsqu'un moteur thermique est à l'arrêt, et corriger la puissance disponible en fonction de la puissance consommée et de la puissance réservée au démarrage.

6. Procédé de commande selon la revendication 1, dans lequel le procédé comprend en outre les étapes consistant à :
(S501) acquérir une valeur de limite de couple de crête pour le moteur et une température du moteur ; et
(S502) corriger une valeur de couple plus petite entre la valeur de limite de couple de crête et le couple limité en fonction de la température du moteur afin d'obtenir un couple limité réel ;
dans lequel la commande du moteur pour qu'il émette en sortie le couple en fonction du couple limité comprend l'étape consistant à :
commander le moteur pour qu'il émette en sortie le couple en fonction du couple limité réel.

7. Procédé de commande selon la revendication 6, dans lequel l'étape (S502) de correction de la valeur de couple plus petite entre la valeur de limite de couple de crête et le couple limité en fonction de la température du moteur afin d'obtenir le couple limité réel comprend les étapes consistant à :
(S601) acquérir une courbe de coefficient(s) de correction de température ;
(S602) déterminer un coefficient de correction de température en fonction de la température du moteur et de la courbe de coefficient(s) de correction de température ; et
(S603) corriger une valeur de couple plus petite entre la valeur de limite de couple de crête et le couple limité en fonction du coefficient de correction de température afin d'obtenir le couple limité réel.

8. Dispositif électronique, comprenant :
une mémoire configurée pour stocker un programme informatique ; et
un processeur configuré pour exécuter le programme informatique stocké dans la mémoire afin de mettre en œuvre le procédé de commande selon l'une quelconque des revendications 1 à 7.

9. Véhicule, comprenant le dispositif électronique selon la revendication 8.

10. Produit de programme informatique comprenant des codes lisibles par ordinateur qui, lorsqu'ils sont exécutés sur un dispositif électronique, forcent le dispositif électronique à réaliser le procédé de commande selon l'une quelconque des revendications 1 à 7.

11. Support lisible par ordinateur, dans lequel le programme informatique selon la revendication 10 est stocké.
